# EUROPÄISCHE PATENTSCHRIFT

(11) **EP 0 673 481 B1**
(45) Veröffentlichungstag und Bekanntmachung des Hinweises auf die Patenterteilung: **19.03.1997**
(21) Anmeldenummer: 94902770.0
(22) Anmeldetag: 15.12.1993
(51) Int. Cl.: F16H 3/093

(54) **UNTER LAST SCHALTBARES, MEHRGÄNGIGES WENDEGETRIEBE**
POWER-SHIFTABLE, MULTIPLE GEAR REVERSING GEAR BOX
BOITE D'INVERSION A VITESSES MULTIPLES COUPLABLE SOUS CHARGE

(30) Priorität: 18.12.1992 DE 4242942
(43) Veröffentlichungstag der Anmeldung: 27.09.1995
(73) Patentinhaber: ZF FRIEDRICHSHAFEN Aktiengesellschaft, 88038 Friedrichshafen (DE)
(72) Erfinder: REBHOLZ, Wolfgang, D-88045 Friedrichshafen (DE); LEBER, Fritz, D-88048 Friedrichshafen (DE)
(86) Internationale Anmeldenummer: EP9303539
(87) Internationale Veröffentlichungsnummer: WO9415116

(56) Entgegenhaltungen:
- WO-A-88/02452
- FR-A- 1 286 532
- GB-A- 1 208 695
- GB-A- 2 125 121
- US-A- 2 867 126

## Beschreibung

Die Erfindung betrifft ein unter Last schaltbares, mehrgängiges Wendegetriebe. Es handelt sich um ein Getriebe, wie es insbesondere in Baumaschinen, wie z. B. Radladern, Baggerladern usw. oder in Flurförderfahrzeugen, wie beispielsweise Staplern, eingesetzt wird. Ein derartiges Getriebe mit den Merkmalen des Oberbegriffs von Anspruch 1 ist aus der FR-A-1 286 532 bekannt. Das

Wendegetriebe der angesprochenen Gattung weist eine Eingangs- und mehrere Vorgelegewellen auf. Es sind Zahnräder vorgesehen, die einen Wendesatz bilden. Auf den Vorgelegewellen sind Schaltkupplungen (sogenannte Richtungskupplungen und Gangschaltkupplungen) mit Losrädern angeordnet, die zur Gang- und Richtungsschaltung wahlweise drehfest mit einer Vorgelegewelle verbindbar sind. Der Abtrieb erfolgt über einen Abtriebsrädersatz. Die Anzahl der Festräder ist abhängig von der Gangzahl des Getriebes.

Lastschaltbare Wendegetriebe in Vorgelegewellenbauweise zeichnen sich durch eine Reihe von Vorteilen aus. Deswegen werden derartige Getriebe bei vielen Nutzfahrzeugen eingesetzt. Die Vielfalt der Arbeitsmaschinen verlangt einen immer höheren Grad der Anpassungsfähigkeit des Getriebes, um die Leistung und das Drehmoment des Motors auszunutzen. Der Einbauraum ist mitunter beträchtlich, wozu auch der Umstand beiträgt, daß diese Getriebe eine beträchtliche axiale Länge und/oder eine beträchtliche Breite in Fahrzeugquerrichtung aufweisen. Die bekannten Getriebe neigen zu Schwingungen und zu übermäßiger Geräuschentwicklung. Es hat sich gezeigt, daß eine in früheren Jahren bei Baumaschinen hingenommene Geräuschentwicklung heute nicht mehr akzeptiert wird.

Der vorliegenden Erfindung liegt die Aufgabe zugrunde, ein unter Last schaltbares , mehrgängiges Wendegetriebe in Vorgelegewellenbauweise zu schaffen, das insbesondere eine hohe Anzahl von Gleichteilen aufweist, in der Anzahl der vorzusehenden Gänge flexibel ist und sich insbesondere auch durch eine geringe Geräuschemission sowie eine vereinfachte Herstellung der ölführenden Teile auszeichnet.

Die der Erfindung zugrunde liegende Aufgabe wird durch die im Anspruch 1 aufgeführten Merkmale gelöst.

Die einfache Bauweise ergibt sich dadurch, daß bei einem zumindest zweiteilig ausgebildeten Gehäuse die Trennfläche zur Ölführung herangezogen wird. Hierbei sind die Ventile in einem Gehäuseteil angeordnet. Ferner ist es dann vorteilhaft, Kanäle zur Ölführung vorzusehen, die eine Verbindung zwischen den Ventilen zu den Schaltkupplungen in einer gemeinsamen Vertikalebene herstellen. Die Kanäle sind vorzugsweise eingegossen. Dadurch wird eine Ölführung ohne spanende Bearbeitung ermöglicht.

Um die Geräuschentwicklung auf einem Minimum zu halten, können Verzahnungen mit großen Schrägungswinkeln eingesetzt werden.

Bei den Schaltkupplungen handelt es sich um hydraulisch gegen Federkraft betätigbare Lamellenkupplungen, die über die Ventile geschaltet werden. Zur Ölführung zweigen von den Kanälen der Trennfläche zwischen zwei Gehäuseteilen axial gerichtete Bohrungen ab. Es ist hierbei möglich, axial gerichtete Bohrungen in den Trägern der Außenlamellen der Schaltkupplungen vorzusehen. Somit wird das zur Betätigung der Schaltkupplungen erforderliche Drucköl auf kurzem Wege in die Ringräume der Schaltkupplungen geleitet.

Das Wendegetriebe ist vorteilhaft in ein Flurförderfahrzeug einbaubar. In Verbindung mit der kurzen axialen Baulänge kann das Getriebe räumlich vor der Achse des Flurförderfahrzeugs angeordnet werden.

Weitere, für die Erfindung wesentliche Merkmale sowie die daraus resultierenden Vorteile sind der nachfolgenden Beschreibung eines Ausführungsbeispiels zu entnehmen. Es zeigen:
- Fig. 1: ein Ausführungsbeispiel eines zwei-gängigen Wendegetriebes, dargestellt als Getriebeschema;
- Fig. 2: Einzelheiten betreffend die Ölzuführung zu einer Schaltkupplung,
- Fig. 3: Einzelheiten betreffend eine abgewandelte Ölzuführung zu einer Schaltkupplung.

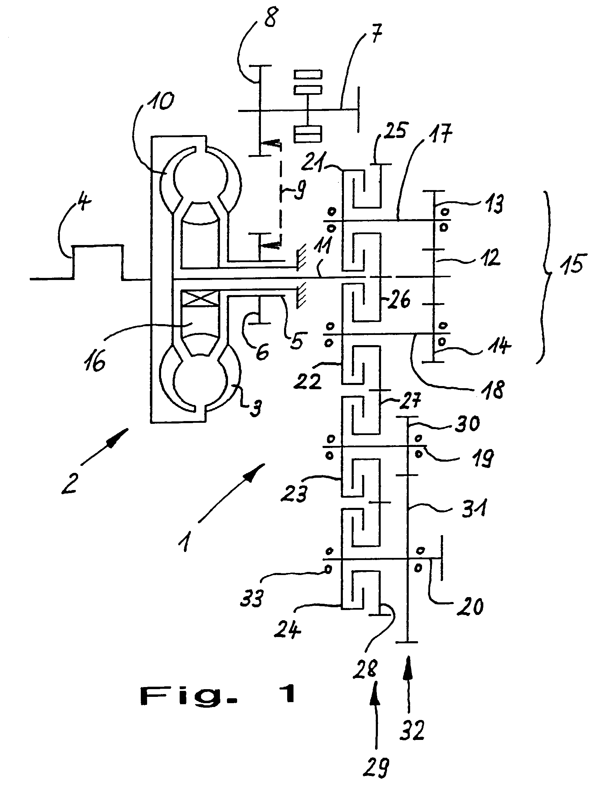

In Fig. 1 ist ein Getriebeschema eines lastschaltbaren Wendegetriebes 1 abgebildet. Es handelt sich um ein zweigängiges Wendegetriebe, dem ein hydrodynamischer Drehmomentwandler 2 vorgeschaltet sein kann, was beispielsweise bei schweren Baufahrzeugen im allgemeinen üblich ist.

Ein Pumpenrad 3 des hydrodynamischen Drehmomentwandlers steht mit einem ebenfalls schematisch angedeuteten Motor 4 in Antriebsverbindung. Auf einer Abtriebswelle 5 des Pumpenrads 3 ist drehfest ein Zahnrad 6 angeordnet, das mit einem auf einer Vorgelegewelle 7 ebenfalls drehfest angeordneten weiteren Zahnrad 8 in kämmender Antriebsverbindung steht, wie dies durch die gestrichelte Verbindung 9 angedeutet ist. Die Zahnräder 6 und 8 und die Vorgelegewelle 7 bilden einen Nebenabtrieb, mit dem beispielsweise eine Ölpumpe oder eine Zapfwelle motordrehzahlabhängig betrieben werden kann.

Das Turbinenrad 10 des hydrodynamischen Drehmomentwandlers 2 ist drehfest mit einer Eingangswelle 11 verbunden. Am in der Zeichnung rechts liegenden Ende der durchgehenden Eingangswelle 11 (aus Gründen der Übersichtlichkeit ist die Eingangswelle 11 in der Zeichnung unterbrochen abgebildet) ist ein Festrad 12 angeordnet. Das Festrad 12 steht mit weiteren Festrädern 13 und 14 in kämmender Antriebsverbindung. Die Festräder 12, 13 und 14 bilden einen Wendesatz 15.

Das Leitrad 16 ist, wie dies allgemein üblich ist, über einen Freilauf ortsfest gelagert.

Das Wendegetriebe 1 ist in Vorgelegewellenbauart ausgebildet. Insgesamt weist das Wendegetriebe vier Vorgelegewellen 17, 18, 19 und 20 auf. Auf den Vorgelegewellen 17 und 18 sind die Festräder 13 und 14 des Wendesatzes 15 angeordnet.

Auf sämtlichen Vorgelegewellen 17 bis 20 ist jeweils eine einzige Schaltkupplung 21, 22, 23 und 24 angeordnet. Bei diesen Schaltkupplungen 21 bis 24 handelt es sich um hydraulisch gegen Federkraft betätigbare nasse Lamellenkupplungen handeln.

Auf jeder der Vorgelegewellen 17 bis 20 ist jeweils ein Losrad 25 und 26 sowie 27 und 28 drehbar angeordnet. Die Losräder 25 bis 28 kämmen ständig miteinander und liegen in einer gemeinsamen Vertikalebene. Sie bilden eine Antriebsräderkette, die mit dem Pfeil 29 hervorgehoben ist.

Der Schaltkupplung 21 ist das Losrad 25 und der Schaltkupplung 22 das Losrad 26 zugeordnet. Bei geöffneter Schaltkupplung 21 oder 22 überträgt das Losrad 25 oder 26 kein Drehmoment. Wird die Kupplung geschlossen, wird das jeweilige Losrad 25 oder 26 drehfest mit der Vorgelegewelle 17 bzw. 18 verbunden.

Der Wendesatz 15 erlaubt in Verbindung mit den Schaltkupplungen 21 und 22 eine Umkehr der Drehrichtung der Vorgelegewelle 20 (in diesem Fall der Ausgangswelle des Getriebes). Aus diesem Grunde werden die Schaltkupplungen 21 und 22 auch als Richtungskupplungen bezeichnet. Die Schaltkupplungen 23 und 24 bilden die Gangschaltkupplungen für den ersten (Schaltkupplung 23 geschlossen) und den zweiten Gang (Schaltkupplung 24 geschlossen). Im ersten Gang wird die Leistung über ein auf der Vorgelegewelle 19 drehfest angeordnetes Festrad 30 auf ein weiteres Festrad 31 der Vorgelegewelle 20 übertragen. Die Festräder 30 und 31 bilden einen Abtriebsrädersatz 32.

Der zweite Gang ist geschaltet, wenn die Schaltkupplung 24 geschlossen ist. Der Leistungfluß erfolgt über die Antriebsräderkette 29 direkt auf die Vorgelegewelle (Ausgangswelle) 20.

Das vorstehend erläuterte Getriebeschema basiert auf einem zwei-gängigen lastschaltbaren Wendegetriebe. Es fällt auf, daß auf jeder der Vorgelegewellen 17 bis 20 jeweils eine einzige Schaltkupplung 21 bis 24, ein einziges Losrad 25 bis 28 und ein einziges Festrad 13, 14 bzw. 30, 31 angeordnet ist. Durch die begrenzte Anzahl der Bauelemente ergibt sich eine sehr kurze axiale Baulänge jeder der Vorgelegewellen 17 bis 20. Die Vorgelegewellen 17 bis 20 sind über jeweils zwei Wälzlager 33 gelagert.

Um möglichst niedrige Geräuschpegel zu erzielen, sind die Los- und Festräder (25 bis 28 bzw. 12 bis 14 sowie 30 und 31) schrägverzahnt. Vorzugsweise werden Verzahnungen mit großen Schrägungswinkel eingesetzt. Durch die axial kurze Bauweise der Vorgelegewellen 17 bis 20 ergeben sich keine großen Biegelasten.

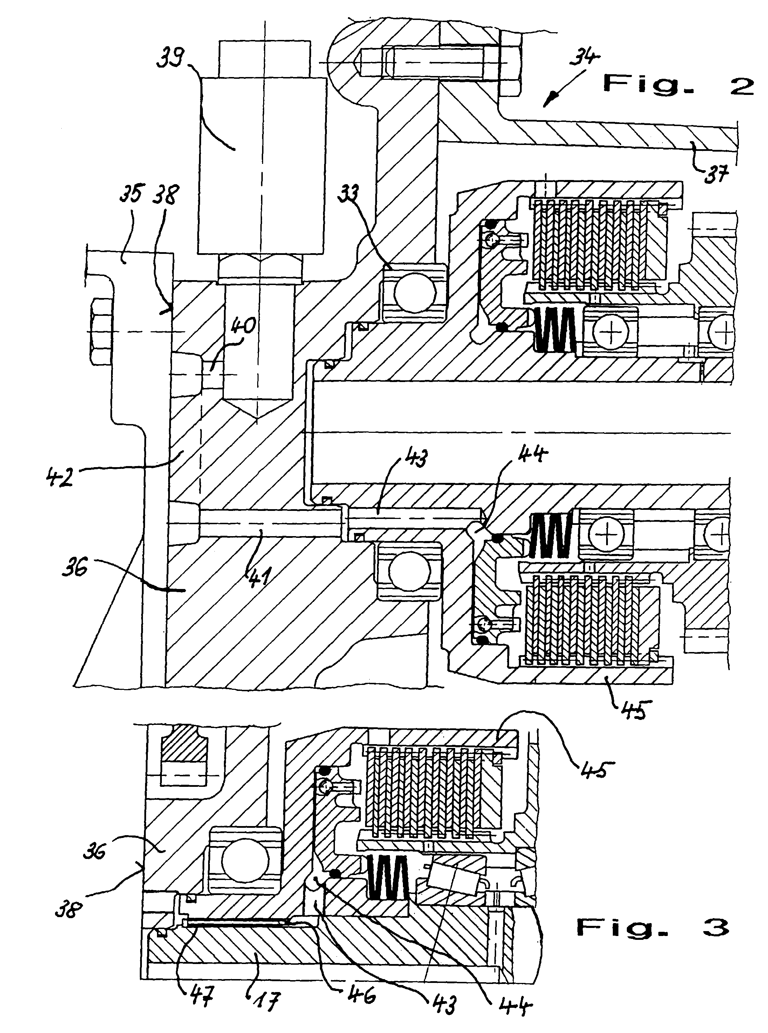

In Fig. 2 ist eine Einzelheit des Wendegetriebes 1 dargestellt. Abgebildet ist insbesondere die in Fig. 1 obenliegende Schaltkupplung 21 (Richtungskupplung vorwärts). In der Zeichnung ist das Pumpenrad 3 andeutungsweise zu erkennen. Das Gehäuse 34 des Wendegetriebes 1 ist mehrteilig ausgebildet. Beim beschriebenen Ausführungsbeispiel besteht das Gehäuse 34 aus drei Teilen 35, 36 und 37. Die Trennfläche 38 zwischen den Teilen 35 und 36 dient der Ölführung zur Betätigung der Schaltkupplung 21. Die zur Schaltung erforderlichen Ventile, von denen ein Ventil 39 abgebildet ist, sind im Teil 36 untergebracht. Die für die Ölführung notwendigen Bohrungen 40 und 41, die sowohl zu den Ventilen 39 selbst, als auch zu den Schaltkupplungen 21 bis 24 führen, sind im Teil 36 des Gehäuses 34 untergebracht. Die Verteilung des Öls erfolgt über Kanäle 42, die vorzugsweise im Teil 36 des Gehäuses 34 eingegossen sind. Diese Kanäle 42 sind gießtechnisch leicht ausformbar und leicht zu reinigen. Eine spanende Bearbeitung ist nicht erforderlich. Das Teil 35 ist gleichzeitig die Wandlerglocke des hydrodynamischen Drehmomentwandlers. Es dient zur Abdeckung der Trennfläche 38. Vorteilhaft ist, daß die ansonsten üblichen Zwischenplatten zur Ölführung entfallen.

Die Bohrung 41 wird durch eine weitere Bohrung 43 verlängert. Diese Bohrung ist im Träger 45 der Außenlamellen der Schaltkupplung 21 untergebracht und führt zu einem Ringraum der Schaltkupplung 21. Es ist ohne weiteres ersichtlich, daß es sich bei der Schaltkupplung 21 um eine hydraulisch gegen die Kraft von Federn im Schließsinne betätigbare nasse Lamellenkupplung handelt. Im übrigen sind alle Schaltkupplungen 21 bis 24 baugleich ausgebildet.

Wie aus der Abbildung entsprechend Fig. 2 noch ersichtlich ist, ist es möglich, die Vorgelegewellen 17 bis 20 auch mittelbar über den Träger der Außenlamellen der Schaltkupplungen 21 bis 24 über die bereits erwähnten Wälzlager 33 im Teil 36 des Gehäuses 34 zu lagern.

Das Wendegetriebe 1 ist, was aus der zeichnerischen Darstellung nicht hervorgeht, etwa kreisförmig ausgebildet (gesehen in Längsrichtung). Die Vorgelegewellen 17 bis 20 sind kreisförmig um die Eingangswelle 11 herum gruppiert. In Fig. 3 ist eine abgewandelte Ölzuführung zeichnerisch dargestellt. Der Träger 45 der Außenlamellen einer der Schaltkupplungen, beispielsweise der Schaltkupplung 21, weist eine Innenverzahnung 46 auf. In diese Innenverzahnung greift eine Außenverzahnung 47 der Vorgelegewelle 17 ein (bzw. der Vorgelegewellen 18, 19 oder 20). Durch die Innenverzahnung 46 und die Außenverzahnung 47 ist der Träger 45 mit der Vorgelegewelle 17 drehfest verbunden. Die Bohrung 41 durchsetzt den Teil 36 des Gehäuses 34 und mündet im Bereich des in der Zeichnung links beginnenden Teils der Innen- und Außenverzahnung 46, 47. Das Öl zur Betätigung der Schaltkupplung wird über die Bohrung 41, die Innen- und Außenverzahnung 46, 47 und die - radial gerichtete - Bohrung 43 im Träger 45 der Außenlamellen dem Ringraum 44 der Schaltkupplung 21 zugeführt.

## Patentansprüche

1. Unter Last schaltbares, mehrgängiges Wendegetriebe (1)
- mit einer Eingangswelle (11) und Vorgelegewellen (17 bis 20) sowie Zahnrädern (12, 13, 14), die einen Wendesatz bilden,
- mit auf den Vorgelegewellen angeordneten, hydraulisch betätigbaren Schaltkupplungen (21 bis 24) mit zugeordneten Losrädern (25 bis 28), die zur Gang- und Richtungsschaltung wahlweise mit einer der Vorgelegewellen drehfest verbindbar sind, wobei die Ölzufuhr zur Betätigung der Schaltkupplungen über Ventile (39), Kanäle (42) und Gehäusebohrungen (40, 41) erfolgt,
- mit einem Abtriebsrädersatz (32), der aus mindestens zwei Festrädern (30, 31) gebildet ist
- und mit einem das Wendegetriebe umgebenden mehrteiligen Gehäuse (43),
dadurch **gekennzeichnet**,
- daß die Kanäle (42) und Gehäusebohrungen (40, 41) in dem die Ventile (39) aufnehmenden Gehäuseteil (36) angeordnet sind,
- daß eine Trennfläche (38) zwischen zwei Gehäuseteilen (35, 36), die Kanäle (42) und die Gehäusebohrungen (40, 41) der Ölführung zu den Ventilen und zu den Schaltkupplungen dienen
- und daß die Ölzufuhr zur Betätigung der Schaltkupplungen ferner über Bohrungen (43) erfolgt, die in den Trägern (45) für die Außenlamellen der Schaltkupplungen angeordnet sind.

2. Getriebe nach Anspruch 1, dadurch **gekennzeichnet,** daß im Träger (45) angeordnete Bohrungen (43) axial gerichtet sind und zu Ringräumen (44) der Schaltkupplungen führen und daß die Bohrungen (43) die Gehäusebohrungen (41), die von den Kanälen (42) abzweigen, verlängern.

3. Getriebe nach den Ansprüchen 1 und 2, dadurch **gekennzeichnet,** daß die Verbindung der Gehäusebohrung (41) mit der im Träger angeordneten Bohrung (43) über je eine Innen- und Außenverzahnung (46, 47) erfolgt.

4. Getriebe nach den Ansprüchen 1 bis 3, **gekennzeichnet** durch die Verwendung in einem Flurförderfahrzeug.

5. Getriebe nach den Ansprüchen 1 bis 4, dadurch **gekennzeichnet,** daß die Fest- und Losräder schrägverzahnt sind und daß das Getriebe räumlich getrennt von einer getriebenen Achse eingebaut ist.

## Claims

1. A power-shiftable, multiple gear reversing gearbox (1)
- with an input shaft (11), layshafts (17 to 20) and gears (12, 13, 14), which form a reversing unit,
- with hydraulically actuated clutches (21 to 24) arranged on the layshafts with associated idlers (25 to 28), which are selectively rotationally rigidly connectable to one of the layshafts for gear and direction changing, the oil supply for the actuation of the clutches being effected via valves (39), ducts (42) and housing bores (40, 41),
- with an output gear unit (32), which is formed by at least two fixed gears (30, 31),
- and with a multi-part housing (43) enclosing the reversing gearbox,
characterised in that
- the ducts (42) and housing bores (40, 41) are arranged in the housing section (36) accommodating the valves (39),
- a partition (38) between two housing sections (35, 36), the ducts (42) and the housing bores (40, 41) are used for the oil supply to the valves and to the clutches
- and the oil supply for actuating the clutches is also effected via bores (43), which are arranged in the supports (45) for the outer discs of the clutches.

2. A gearbox according to claim 1, characterised in that bores (43) arranged in the support (45) are axially aligned and lead to annular chambers (44) in the clutches, and the bores (43) are extensions of the housing bores (41), which branch off from the ducts (42).

3. A gearbox according to claims 1 and 2, characterised in that the connection between the housing bore (41) and the bore (43) arranged in the support is effected by means of an inner and outer toothing in each case (46, 47).

4. A gearbox according to claims 1 to 3, characterised by its use in a floor-mounted conveyor.

5. A gearbox according to claims 1 to 4, characterised in that the fixed gears and idlers are helical-toothed and the gearbox is fitted separately from a driven axle.

## Revendications

1. Transmission (1) à engrenages multiples manoeuvrable en charge
- avec un arbre d'entrée (11) et des arbres intermédiaires (17 à 20) ainsi que des roues dentées (12, 13, 14) qui forment un ensemble réversible,
- avec des embrayages (21 à 24) hydrauliques agencés sur les arbres intermédiaires avec des roues folles (25 à 28) correspondantes, qui sont combinables d'une manière résistant à la rotation avec l'un des arbres intermédiaires lors du changement de vitesse et de direction, l'amenée d'huile s'effectuant lors de l'actionnement des embrayages par des soupapes (39), des conduits (42) et des alésages du carter (40, 41),
- avec un harnais de transmission (32) qui est constitué d'au moins deux roues fixes (30, 31)
- et avec un carter (43) à plusieurs parties entourant la transmission réversible,
**caractérisée**
- en ce que les conduits (42) et les alésages (40, 41) sont agencés dans la partie du carter (36) comprenant les soupapes (39),
- en ce qu'une surface de séparation (38) entre deux parties de carter (35, 36), les conduits (42) et les alésages (40, 41) ont pour rôle d'amener de l'huile aux soupapes et aux embrayages
- et en ce que l'amenée d'huile pour actionner les embrayages s'effectue en outre par des alésages (43) qui sont agencés dans des supports (45) pour les disques extérieurs des embrayages.

2. Transmission selon la revendication 1, **caractérisée en ce que** les alésages (43) agencés dans le support (45) sont disposés axialement et conduisent à des espaces annulaires (44) des embrayages et en ce que les alésages (43) prolongent les alésages du carter (41) qui dérivent des conduits (42).

3. Transmission selon les revendications 1 et 2, **caractérisée en ce que** la liaison entre l'alésage du carter (41) et l'alésage (43) agencé dans le support s'effectue par un engrenage intérieur (46) et un engrenage extérieur (47).

4. Transmission selon les revendications 1 à 3, **caractérisée en ce qu'**on l'utilise dans un chariot de manutention.

5. Transmission selon les revendications 1 à 4, **caractérisée en ce que** les roues fixes et les roues folles sont des engrenages hélicoïdaux, et en ce que la transmission est mise en place séparément d'un axe commandé.
